# EUROPEAN PATENT SPECIFICATION

(11) **EP 0 561 603 B1**
(45) Date of publication and mention of the grant of the patent: **07.02.1996**
(21) Application number: 93301969.7
(22) Date of filing: 16.03.1993
(51) Int. Cl.: B21B 37/00, G01L 5/04

(54) **Flatness detector**
Planheitsdetektor
Détecteur de planéité

(30) Priority: 17.03.1992 JP 14231/92
(43) Date of publication of application: 22.09.1993
(73) Proprietor: ISHIKAWAJIMA-HARIMA JUKOGYO KABUSHIKI KAISHA, Chiyoda-ku Tokyo-to (JP)
(72) Inventor: Kira, Yoichi, Yokohama-shi, Kanagawa-ken (JP); Misumi, Kenji, Yokohama-shi, Kanagawa-ken (JP)
(74) Representative: Jennings, Nigel Robin

(56) References cited:
- DE-A- 2 146 814
- GB-A- 1 160 112
- PATENT ABSTRACTS OF JAPAN vol. 16, no. 123 (P-1330)27 March 1992 & JP-A-32 89 510 ( SHOWA ALUM ) 19 December 1991
- SOVIET INVENTIONS ILLUSTRATED Section Ch, Week K23, 20 July 1983 Derwent Publications Ltd., London, GB; Class M21, AN 55563 K/23 & SU-A-944 698 (ALLOYS NON-FERR METAL) 23 July 1982

## Description

The present invention relates to a flatness detector for detecting the flatness of a strip of, for instance, rolled steel and is concerned with that type of detector which includes a fixed shaft, a plurality of rotary rings loosely fitted over the shaft and situated adjacent to one another along the axis of the shaft, a pneumatic bearing between the shaft and the rings and heating means associated with the shaft for heating it. The present invention also relates to a method of using a flatness detector.

In the rolling of metal plate or the like into strip form, a control system has been used in which the tension distribution along the width of the strip is measured. The flatness of the strip is determined on the basis of the measured distribution and the appropriate control is effected to improve the flatness.

A further known flatness detector comprises a fixed shaft and a plurality of rotary rings loosely fitted over the shaft adjacent to each other along the axis of the shaft. Compressed air is supplied to the gap between the rings and the shaft to provide a pneumatic bearing. With this flatness detector, any variation of the gap is detected in terms of pressure variations which in turn are used to determine the flatness of the strip.

With the known flatness detector, the compressed air supplied to the pneumatic bearing is usually dry air so that the shaft and the rings fitted therefore are supercooled by the dry air whilst the moving rolled strip is hot. As a result, when the hot strip contacts the supercooled rings it is subjected to sudden temperature variations, and longitudinal wrinkles are produced on the strip due to shrinkage of the strip.

Such longitudinal wrinkles on the strip may be prevented by increasing the tension of the strip during rolling. However, this would be disadvantageous in that the strip being rolled tends to be torn, thereby resulting in a decrease in productivity.

In order to prevent the longitudinal wrinkles, a flatness detector may also be contemplated with a crowned contour so as to vary the tension imparted to the strip along the width of the strip and to suppress production of the longitudinal wrinkles on the strip. This idea has been already applied to single rolls.

However, it is extremely difficult to make a crowned flatness detector having a plurality of mutually adjacent rotary rings as mentioned above.

JP-A-3-289510, on which the precharacterising portion of Claim 1 is based, discloses a flatness detector comprising a shape detecting roll comprising a plurality of separate coaxial rolls which are free to move radially as a result of the provision of bearing air. In order to prevent the formation of wrinkles, the detection roll is heated to a temperature approximating to that of the strip by heating the bearing air. There is no disclosure of compensating for bending of the roll caused by tension in the strip or by the weight of the roll itself.

It is the object of the present invention to overcome the above problems and, in particular, to provide a flatness detector which can substantially eliminate the production of longitudinal wrinkles on a strip.

According to the present invention a flatness detector of the type referred to above is characterised in that the heating means comprise one or more passages extending through the shaft 1 and connected to a source of a heating fluid and by bending means at opposite ends of the shaft for bending it, in use, into a convex shape in the direction towards the rolled strip.

The heating means may be used to increase the temperature of the shaft and the rings to a value substantially equal to that of the rolled strip or the like whose flatness is to be measured. As a consequence, shrinkage of the rolled strip on contact with the rings is prevented.

The bending means at the opposed ends of the shaft are used to bend the shaft into a convex shape towards the strip whose flatness is being measured so that the overall shape of the rings is crowned. As a result, the tension imparted to the strip by the detector can be varied along the width of the strip so as to suppress the formation of longitudinal wrinkles on the strip.

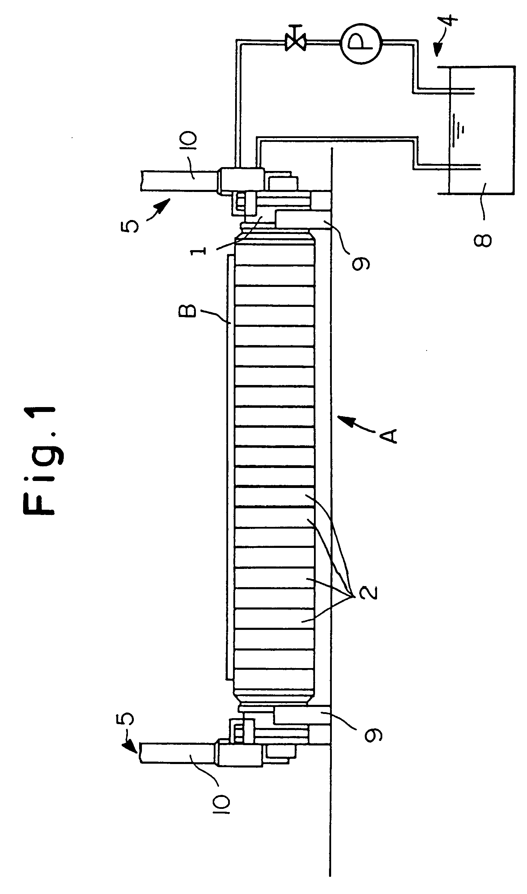

Further features and details of the present invention will be apparent from the following description of one specific embodiment which is given with reference to the accompanying drawings, in which:-
Figure 1 is a front view of a flatness detector embodying the present invention;

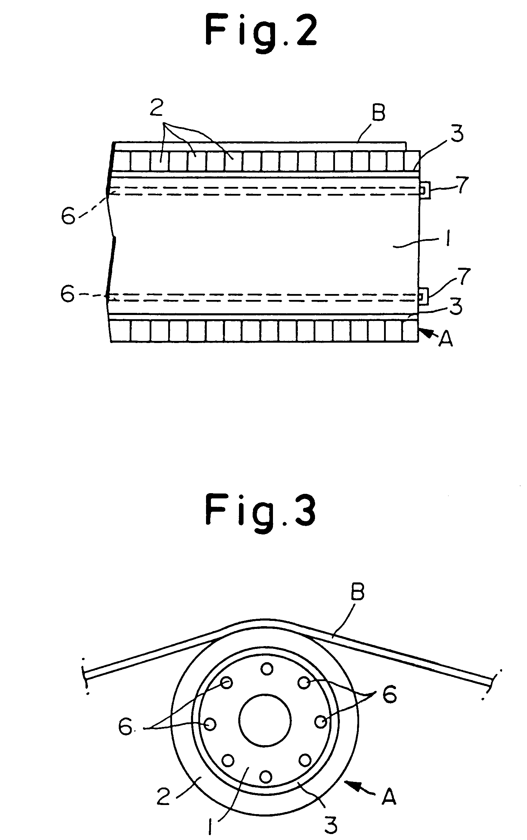

Figure 2 is a longitudinal vertical sectional view thereof; and
Figure 3 is a transverse vertical sectional view thereof.

In the drawings, reference characters A and B respectively denote a flatness detector and a strip, such as rolled steel. During rolling, the strip B contacts the top of the flatness detector A and is inclined at a predetermined angle to the horizontal.

The flatness detector A comprises a fixed shaft 1, a plurality of rotary rings 2, a gap between the rings and the shaft which constitutes a pneumatic bearing 3, heating means 4 and bending means 5.

The shaft 1 is the axle of the flatness detector A and is supported at its opposite ends by suitable supporting means.

The rings 2 are rotatably fitted over the shaft 1 in close contact with each other along the axis of the shaft 1. Each ring 2 is coupled to a pressure sensor (not shown) to detect any pressure variation, at that ring 2, of a pneumatic bearing 3 which will be described in detail below.

The pneumatic bearing 3 is defined by a gap between the rings 2 and the shaft 1 which is supplied with compressed air through holes (not shown) in the shaft 1.

The heating means 4 comprises a plurality of bores or holes 6 extending through the shaft 1 parallel to one another along the axis of the shaft 1, means 7 for connecting the holes 6 to a heating medium supply 8 for supplying a heating medium to the holes 6 and discharging it to the exterior after it has passed through the holes 6.

The bending means 5 are provided at both ends of the shaft 1 and each comprises a support 9 for supporting the shaft 1 at the side opposite to the direction of bending the shaft 1 and a bending bolt 10 arranged outwardly of and on the side opposite to the support 9 for exerting a pressing force on the shaft 1 to bend it in the predetermined direction.

The mode of operation of the flatness detector described above is as follows:-
When rolling commences, compressed air is supplied to the gap between the shaft 1 and the rings 2 to provide the pneumatic bearing 3. The rings 2 supported by the bearing 3 are caused to rotate by the moving rolled strip B. The forces applied by the strip B onto the rings 2 are detected in terms of pressure variations in the pneumatic bearing 3 by the pressure sensors (not shown) coupled to the rings 2. In response to the detected pressure variations, the tension distribution across the width of the strip B and hence its flatness thereof is determined.

The heating medium is pumped from the supply 8 through the holes 6 through the shaft 1 so that the rings 2 are heated by heat transmitted from the shaft 1 through the pneumatic bearing 3. As a result, the temperature difference between the strip B, which is hot due to rolling, and the rings 2 is eliminated and local shrinkage of the rolled strip B due to sudden temperature variations is prevented.

In addition, the bolts 10 are tightened to exert a generally downward force on the shaft 1 outside the supports 9 so as to bend the shaft 1 about the supports 9 into a convex form towards the strip B. The rings 2 therefore afford together a generally crown-like contour so that different tensions are produced in the middle of the strip B across its width and in the side edges of the strip B.

The formation of the longitudinal wrinkles on the strip B is prevented by heating and bending of the flatness detector A as described above and the desired flatness of the strip B is thus maintained in a satisfactory manner even when the strip B passes over the flatness detector A.

Since the formation of the longitudinal wrinkles on the strip B is prevented in the manner described above, there is no necessity to increase the tension of the strip when rolling for the purpose of preventing formation of the wrinkles on the strip. As a consequence, breakage of the strip and a reduction in productivity are suppressed.

As compared with the contemplated formation of a crown configuration on a flatness detector, the flatness detector according to the present invention is simple to manufacture and is advantageous thus as regards both cost and utility.

It will be understood that the present invention is not limited to the preferred embodiment described above and that various modifications may be effected without departing from the scope of the present invention which is defined in the appended claims.

## Claims

1. A flatness detector for detecting the flatness of a rolled strip (B) including a fixed shaft (1), a plurality of rotary rings (2) loosely fitted over the shaft (1) and situated adjacent to one another along the axis of the shaft, a pneumatic bearing (3) between the shaft (1) and the rings (2) and heating means (6) associated with the shaft (1) for heating it characterised in that the heating means comprise one or more passages (6) extending through the shaft (1) and connected to a source (8) of a heating fluid and by bending means (5) at opposite ends of the shaft (1) for bending it, in use, into a convex shape in the direction towards the rolled strip (B).

2. A detector as claimed in Claim 1 characterised by means for supplying air to the space between the shaft (1) and the rings (2) to form the pneumatic bearing (3).

3. A method of detecting the flatness of a rolled strip (B) using a detector according to claim 1 the method including blowing air into the space between the rings (2) and the shaft (1) to form a pneumatic bearing (3), heating the rings (2) to a temperature approximating to that of the rolled strip (B) by heating the shaft (1) and thus the rings (2) by passing a heated fluid through one or more passages (6) extending through the shaft (1) and bringing the rings (2) into contact with the surface of the rolled strip (B), whilst moving, and bending the shaft (1) into a convex shape in the direction towards the rolled strip (B).

## Patentansprüche

1. Planheitsdetektor zum Feststellen der Planheit eines gewalzten Streifens (B), umfassend eine feststehende Achse (1), eine Mehrzahl von Drehringen (2), die lose auf der Achse (1) angeordnet sind und einander in Achsrichtung benachbart auf der Achse angeordnet sind, ein pneumatisches Lager (3) zwischen der Achse (1) und den Ringen (2) sowie mit der Achse (1) verbundene Heizmittel (6), um diese aufzuheizen, dadurch gekennzeichnet, daß die Heizmittel einen oder mehrere sich durch die Achse (1) erstreckende und mit einer Quelle (8) für ein Heizfluid verbundene Kanäle (6) umfassen, und gekennzeichnet durch Biegemittel (5) an entgegengesetzten Enden der Achse (1), um diese während des Gebrauchs konvex in Richtung auf den gewalzten Streifen (B) hin zu wölben.

2. Detektor nach Anspruch 1, gekennzeichnet durch Mittel zum Zuführen von Luft in den Raum zwischen der Achse (1) und den Ringen (2), um das pneumatische Lager (3) zu bilden.

3. Verfahren zum Feststellen der Planheit eines gewalzten Streifens (B) unter Verwendung eines Detektors nach Anspruch 1, wobei das Verfahren folgende Schritte umfaßt:
Blasen von Luft in den Raum zwischen den Ringen (2) und der Achse (1), um ein pneumatisches Lager (3) zu bilden,
Aufheizen der Ringe (2) auf eine Temperatur ähnlich der des gewalzten Streifens (B) durch Aufheizen der Achse (1) und damit der Ringe (2) durch Leiten eines erhitzten Fluids durch einen oder mehrere sich durch die Achse (1) erstreckende Kanäle (6),
Inkontaktbringen der Ringe (2) mit der Oberfläche des gewalzten Streifens (B) während der Bewegung und
Wölben der Achse (1) konvex in Richtung auf den gewalzten Streifen (B) zu.

## Revendications

1. Détecteur de planéité pour détecter la planéité d'une bande laminée (B), comprenant un arbre fixe (1), une pluralité de bagues rotatives (2) ajustées de façon lâche sur l'arbre (1) et situées à côté les unes des autres le long de l'axe de l'arbre, un palier pneumatique (3) entre l'arbre (1) et les bagues (2), et des moyens de chauffage (6) associés à l'arbre (1) pour le chauffer, caractérisé en ce que les moyens de chauffage comprennent un ou plusieurs passages (6) s'étendant au travers de l'arbre (1) et reliés à une source (8) d'un fluide de chauffage, et par des moyens de flexion (5) au niveau des extrémités opposées de l'arbre (1) pour le courber, en utilisation, en une forme convexe en direction de la bande laminée (B).

2. Détecteur selon la revendication 1, caractérisé par des moyens pour amener de l'air dans l'intervalle compris entre l'arbre (1) et les bagues (2) afin de former le palier pneumatique (3).

3. Procédé de détection de la planéité d'une bande laminée (B) en utilisant un détecteur selon la revendication 1, le procédé comprenant les étapes consistant à souffler de l'air dans l'intervalle compris entre les bagues (2) et l'arbre (1) afin de former un palier pneumatique (3), à chauffer les bagues (2) jusqu'à une température s'approchant de celle de la bande laminée (B) en chauffant l'arbre (1) et ainsi les bagues (2) en faisant passer un fluide chauffé au travers d'un ou plusieurs passages (6) s'étendant à travers l'arbre (1), à amener les bagues (2) en contact avec la surface de la bande laminée (B), tout en la déplaçant, et à courber l'arbre (1) en une forme convexe en direction de la bande laminée (B).
